(19) Europäisches Patentamt
European Patent Office
Office européen des brevets

(11) Veröffentlichungsnummer: **0 085 025**
**B1**

(12) # EUROPÄISCHE PATENTSCHRIFT

(45) Veröffentlichungstag der Patentschrift: **15.10.86**

(51) Int. Cl.⁴: **C 09 B 62/503**, C 09 B 62/0
D 06 P 3/66, D 06 P 3/10

(21) Anmeldenummer: **83810017.0**

(22) Anmeldetag: **17.01.83**

(54) **Reaktivfarbstoffe, deren Herstellung und Verwendung.**

(30) Priorität: **21.01.82 CH 369/82**

(43) Veröffentlichungstag der Anmeldung: **03.08.83 Patentblatt 83/31**

(45) Bekanntmachung des Hinweises auf die Patenterteilung: **15.10.86 Patentblatt 86/42**

(84) Benannte Vertragsstaaten: **CH DE FR GB LI**

(56) Entgegenhaltungen:
**EP-A-0 036 582**
**FR-A-2 430 442**
**FR-A-2 437 426**

(73) Patentinhaber: **CIBA-GEIGY AG, Klybeckstrasse 141, CH-4002 Basel (CH)**

(72) Erfinder: **Markert, Jürgen, Dr., Im Guntengarten 32, CH-4107 Ettingen (CH)**
Erfinder: **Seiler, Herbert, Dr., Leimgrubenweg 6( CH-4125 Riehen (CH)**

Anmerkung: Innerhalb von neun Monaten nach der Bekanntmachung des Hinweises auf die Erteilung des europäischen Pate Europäischen Patentblatt kann jedermann beim Europäischen Patentamt gegen das erteilte europäische Patent Einspruch ein Der Einspruch ist schriftlich einzureichen und zu begründen. Er gilt erst als eingelegt, wenn die Einspruchsgebühr entrichtet w ist (Art. 99(1) Europäisches Patentübereinkommen).

EP 0 085 025 B1

LIBER, STOCKHOLM 1986

**Beschreibung**

Reaktivfarbstoffe werden in grossem Umfang für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in bezug auf Eignung für bestimmte Färbeverfahren und Echtsheitsniveau der Färbungen, vielfach nicht voll befriedigen. Dies gilt auch für Reaktivfarbstoffe im Ausziehfärbeverfahren, besonders bei niedrigen Färbetemperaturen. Die Bereitstellung von verbesserten Reaktivfarbstoffen ist daher dringend erwünscht.

Der vorliegenden Erfindung lag die Aufgabe zugrunde, neue Reaktivfarbstoffe zu finden, die eine besondere Eignung für das Ausziehfärbeverfahren besitzen. Es hat sich gezeigt, dass die weiter unten definierten neuen Reaktivfarbstoffe den gestellten Anforderungen weitgehend entsprechen.

Gegenstand der Erfindung sind Reaktivfarbstoffe der Formel

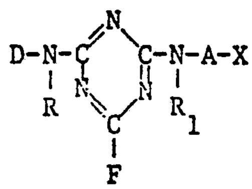

(1),

worin D der Rest eines organischen farbstoffes, R Wasserstoff oder gegebenenfalls substituiertes $C_{1-4}$-Alkyl, $R_1$ Wasserstoff, Methyl oder Aethyl, A ein gegebenenfalls substituiertes aliphatisches oder aromatisches Brückenglied, X ein Rest

$-SO_2-C_2H_4-Y$ oder, nur wenn A ein gegebenenfalls substituiertes aromatisches Brückenglied ist, ein Rest

$$-SO_2-C_2H_4-Y$$

Y ein Rest

$-O-CO-R_3$

oder $-O-SO_2-R_3$,

$R_2$ Wasserstoff, Methyl oder Aethyl und $R_3$ ein gegebenenfalls substituierter aliphatischer oder aromatischer Rest ist.

Der Rest D ist insbesondere der Rest eines sulfogruppenhaltigen organischen farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe.

Der Rest D in formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 his 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy, Benzoylamino, Amino, Acctylamino, Ureido, Sulfomethyl, Hydroxy, Carboxy, Halogen und Sulfo.

Als Alkylrest kommt für R in Formel (1) ein geradkettiger oder verzweigter Alkylrest in Betracht, der auch substituiert sein kann, z.b. durch Halogen Hydroxy, Cyan oder Sulfo. Als Beispiele für R seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Das aliphatische oder aromatische Brückenglied A ist vorzugsweise ein Alkylen- oder Arylenrest. Der Ausdruck aliphatisches Brückenglied schliesst auch cycloaliphatische Reste ein.

So kann A ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Aethylen, Propylen, Butylen, Hexylen oder Cyclohexylen.

Als Arylenrest ist A z.B. ein Naphthylenrest, der Rest eines Diphenyls oder Stilbens oder insbesondere ein Phenylenrest. Der Rest A kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist

A $C_{2-6}$-Alkylen oder Phenylen.

Bevorzugt ist der Aethylenrest und der Phenylenrest.

Der gegebenenfalls substituierte aliphatische oder aromatische Rest $R_3$ ist z.B. ein Alkylrest, der geradkettig oder verzweigt ist, der vorzugsweise 1 bis 7 Kohlenstoffatome aufweist, und der weitersubstituiert sein kann, z.B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z.B. durch Methyl, Aethyl, Methoxy, Aethoxy, Chlor, Brom, Carboxy, Sulfo oder Sulfomethyl substituiert sein kann.

Als Beispiele für $R_3$ seien die folgenden Substituenten genannt: Methyl, Aethyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Aethylphenyl, p-Methoxyphenyl, o-, m- oder p-Sulfophenyl, p-Carboxyphenyl und p-Sulfomethylphenyl. Bevorzugt sind unsubstituierte Alkylreste mit 1 bis 4 Kohlenstoffatomen.

Insbesondere ist $R_3$ Methyl.

Bevorzugte Untergruppen der Reaktivfarbstoffe der Formel (1) sind:

a) Reaktivfarbstoffe der Formel

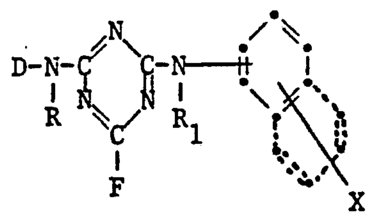

(2),

worin D, R, $R_1$ und X die unter Formel (1) angegebenen Bedeutungen haben, und der Benzol- bzw. Naphthalinrest ausser X weitere Substituenten enthalten kann.

Falls der über das -N($R_1$)-Brückenglied an den s-Triazinring gebundene Rest ein Naphthalinrest ist, kann dieser in α- oder β-Stellung sein.

b) Reaktivfarbstoffe gemäss a), der Formel

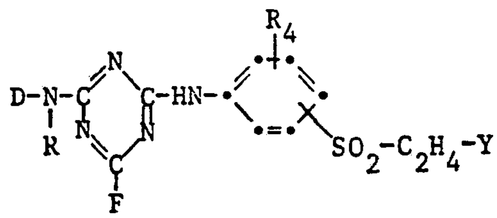

(3),

worin D und R die unter Formel (2) angegebenen Bedeutungen haben, Y Acetoxy, Aethylcarbonyloxy, Benzyloxy, Tosyloxy, Phthaloyloxy oder Methylsulfonyloxy, und $R_4$ Wasserstoff, Methyl oder Methoxy ist.

c) Reaktivfarbstoffe der Formel

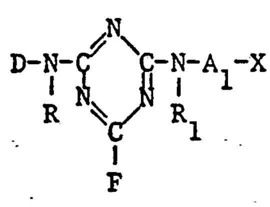

(4),

worin D, R, $R_1$ und X die unter Formel (1) angegebenen Bedeutungen haben, und $A_1$ $C_{2-6}$-Alkylen ist.

d) Reaktivfarbstoffe gemäss c), der Formel

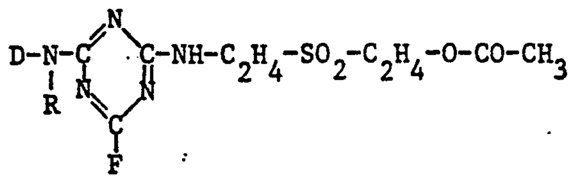

(5),

worin D und R die unter Formel (4) angegebenen Bedeutungen haben.

e) Reaktivfarbstoffe der Formel (1), worin D der Rest eines Monooder Disazofarbstoffes ist.

f) Reaktivfarbstoffe der Formel (1), worin D der Rest eines Metallkomplexazo- oder Formazanfarbstoffes ist.

g) Reaktivfarbstoffe der Formel (1), worin D der Rest eines Anthrachinonfarbstoffes ist.

h) Reaktivfarbstoffe gemäss f), worin D der Rest eines Metallkomplexazofarbstoffes der Benzol- oder Naphthalinreihe ist.

i) Reaktivfarbstoffe gemäss h), worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

j) Reaktivfarbstoffe gemäss e) der Formel

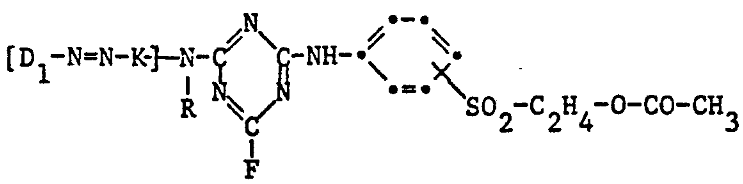

(6),

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist.

k) Reaktivfarbstoffe gemäss j), worin R Wasserstoff, Methyl oder Aethyl ist.

Die Farbstoffe der Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man einen organischen Farbstoff der Formel

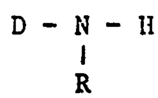

(7)

oder ein Farbstoffvorprodukt, 2,4,6-Trifluor-s-triazin und ein Amin der Formel

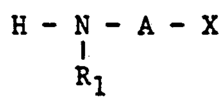

(8)

kondensiert, wobei D, R, $R_1$, A und X in den Formeln (7) und (8) die unter Formel (1) angegebenen Bedeutungen haben, und dass man im Falle der Verwendung von Farbstoffvorprodukten, die erhaltenen Zwischenverbindungen in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe, insbesondere der Formeln (7) und (8) ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Eine wichtige Ausführungsform besteht darin, dass man 2,4,6-Trifluor-s-triazin zuerst mit einem organischen Farbstoff der Formel (7) und danach mit einem Amin der Formel (8) kondensiert.

Oder man setzt zunächst 2,4,6-Trifluor-s-triazin mit einem Amin der Formel (8) um, und kondensiert die erhaltene Difluortriazinverbindung mit einem organischen Farbstoff der Formel (7).

Eine andere Methode besteht darin, zunächst einen Farbstoff herzustellen, der eine Vorstufe des

Reaktivrestes enthält, um diese nachträglich in die Endstufe umzuwandeln, z.B. durch Veresterung.

Beispielsweise kann man einen Difluortriazinfarbstoff mit einem Amin der Formel

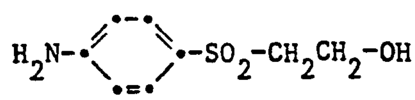

kondensieren, und das Zwischenprodukt mit Essigsäurcanhydrid umsetzen, so dass die Hydroxygruppe in die Acetoxygruppe überführt wird.

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffs der Formel (7), die eine Gruppe -N(R)H enthält, und 2,4,6-Trifluor-s-triazin kondensiert, und in einer geeigneten Stufe des Verfahrens, gegebenenfalls auch vorher, mit einem Amin der Formel (8) und mit der anderen (bzw. den übrigen) Komponente(n) des Farbstoffs der Formel (7) umsetzt, und gegebenenfalls eine andere Umwandlungsreaktion anschliesst.

Beispiele für derartige, aus zwei oder mehr als zwei Komponenten zusammengesetzte organische Farbstöffe sind: Monoazo-, Disazo-, Trisazo-, Tetrazo-, Metallkomplexazo-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe -N(R)H enthält, mit 2,4,6-Trifluor-s-triazin kondensiert, das erhaltene Kondensationsprodukt diazotiert und auf eine Kupplungskomponente kuppelt, und vor oder nach der Kondensation oder nach der Kupplung mit einem Amin der Formel (8) kondensiert und gegebenenfalls eine andere Umwandlungsreaktion anschliesst.

Die zweite Variante ist dadurch gekennzeichnet, dass man eine Kupplungskomponente des Farbstoffs, die eine Cruppe -N(R)H enthält, mit 2,4,6-Trifluor-s-triazin kondensiert, und auf das so erhaltene Kondensationsprodukt eine diazotierte Diazokoniponente kuppelt, und vor oder nach der Kondensation oder nach der Kupplung mit einem Amin der Formel (8) kondensiert und gegebenenfalls eine weitere Umwandlungsreaktion anschliesst.

Nach diesen Verfahrensvarianten können Reaktivfarbstoffe der Formel (1), die zwei Reaktivreste enthalten, hergestellt werden, indem man eine Diazokomponente, die eine Gruppe -N(R)H enthält, mit 2,4,6-Trifluor-s-triazin kondensiert, dass man ferner eine Kupplungskomponente, die eine Gruppe -N(R)H enthält, mit 2,4,6-Trifluor-s-triazin kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit Aminen der Formel (8) kondensiert, und gegebenenfalls eine Umwandlungsreaktion anschliesst.

Farbstoffe der Formel (1), die zwei Reaktivreste enthalten, sind auch in der Weise herstellbar, dass man Farbstoffe der Formel (7) verwendet, die in D eine weitere Gruppe -N(R)H enthalten, diese mit einer entsprechenden Menge 2,4,6-Trifluor-s-triazin kondensiert, so dass zwei Fluortriazinreste in das Farbstoffmolekül eingeführt werden, dann mit einer entsprechenden Menge eines Amins der Formel (8) kondensiert und gegebenenfalls acyliert oder dgl.

Vorzugsweise verwendet man als Ausgangsstoffe organische Farbstoffe der Formel (7), worin D der Rest eines Mono- oder Disazofarbstoffes ist.

Vorzugsweise verwendet man ferner Amine der Formel (8), worin A Aethylen oder Phenylen ist.

Eine bevorzugte Ausführungsform ist dadurch gekennzeichnet, dass man organische Farbstoffe der Formel

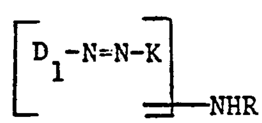

(9),

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, als Ausgangsstoffe verwendet.

Falls die fertigen Reaktivfarbstoffe der Formel (1) komplexbildende Gruppen enthalten, können sie nachträglich mit schwermetallabgebenden Mitteln umgesetzt werden.

Nach einer weiteren bevorzugten Herstellungsweise verwendet man Farbstoffe der Formel (7), worin D der

Rest eines Metallkomplexazo- oder Formazanfarbstoffes ist.

Die als Ausgangsstoffe verwendeten Farbstoffe der Formel (7) können im Rest D wie weiter vorn beschrieben substituiert sein. Vorzugsweise geht man von organischen Farbstoffen der Formel (7) aus, worin D der Rest eines Azofarbstoffes ist, der als Substituent Methyl, Aethyl, Methoxy, Benzoylamino, Amino, Acetylamino, Ureido, Sulfomethyl, Hydroxy, Carboxy, Halogen und Sulfo enthalten kann.

Als Amine der Formel (8) verwendet man vorzugsweise die Verbindungen der Formel

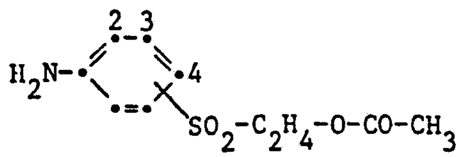
(10).

Die Kondensation des 2,4,6-Trifluor-s-triazins mit den organischen Farbstoffen der Formel (7) bzw. den eine Gruppe -N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5° und bei schwach saurem, neutralem bis schwach allkalischem $p_H$-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit den Aminen der Formel (8), setzt man die freien Amine oder deren Salze,bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem $p_H$-Bereich von 2 bis 6,5, bevorzugt 5 bis 6,5, durchgeführt.

Die Kondensation des Fluortriazins mit einem Amin der Formel (8) kann vor oder nach der Kondensation des Fluortriazins mit einem Farbstoff der Formel (7) geschehen. Die Kondensation des Fluortriazins mit einem Amin der Formel (8) erfolgt vorzugsweise in wässriger Lösung oder Suspension, bei niedriger Temperatur und bei schwach saurem bis neutralem $p_H$ -Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Im folgenden sollen mögliche Ausgangsstoffe, die zur Herstellung der Reaktivfarbstoffe der Formel (1) verwendet werden können, einzeln genannt werden.

Als Farbstoffe der Formel (7) kommen besonders Farbstoffe der folgenden strukturtypen in Betracht:

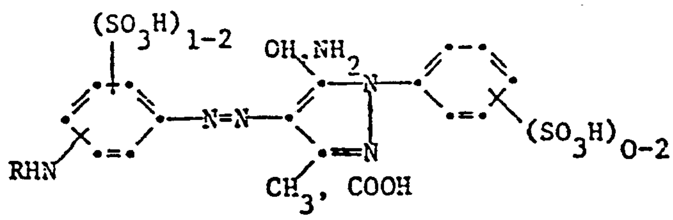

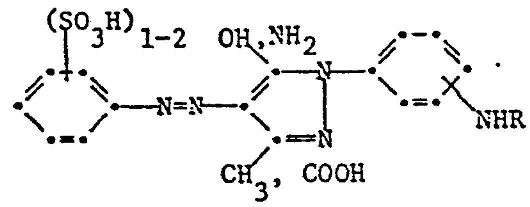

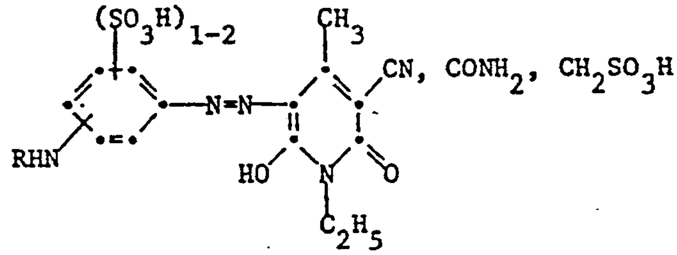

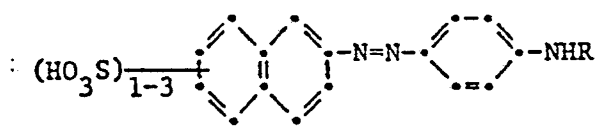

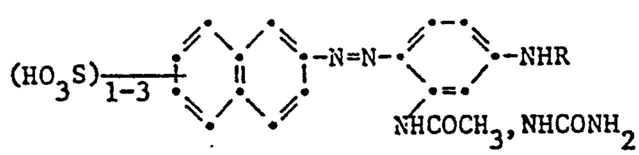

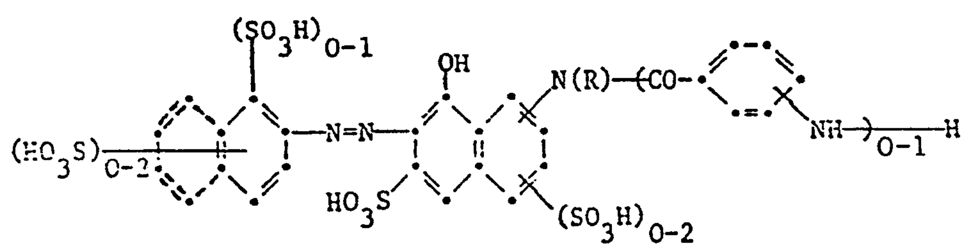

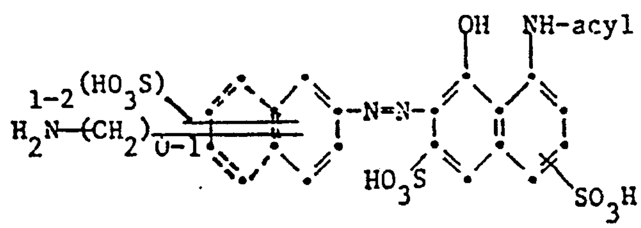

worin acyl z.B. Acetyl oder gegebenenfalls substituiertes Benzyl ist.
Metallkomplexe von Farbstoffen der Formeln:

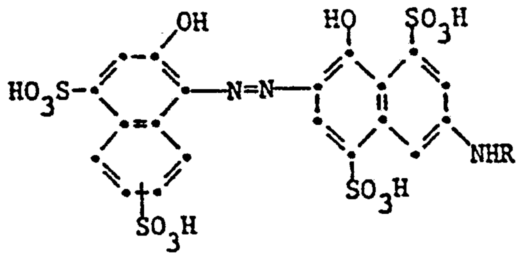

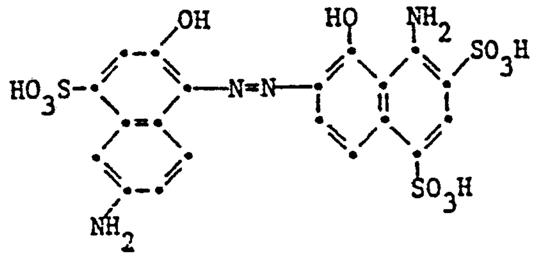

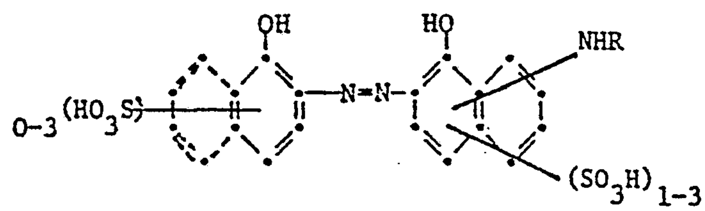

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

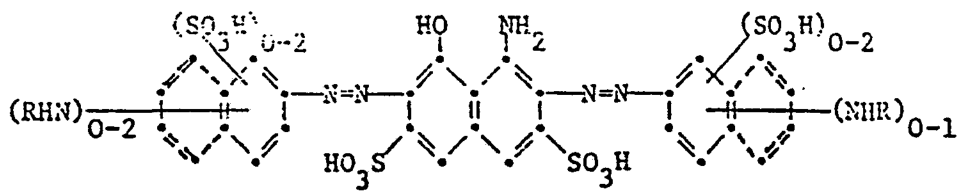

Die durch Strichelungen angedeuteten kondensierten Ringe stehen für alternativ mögliche Naphthalinsysteme.

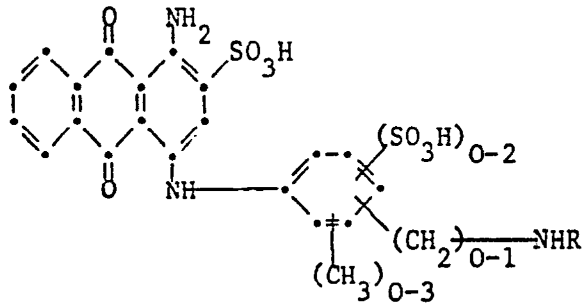

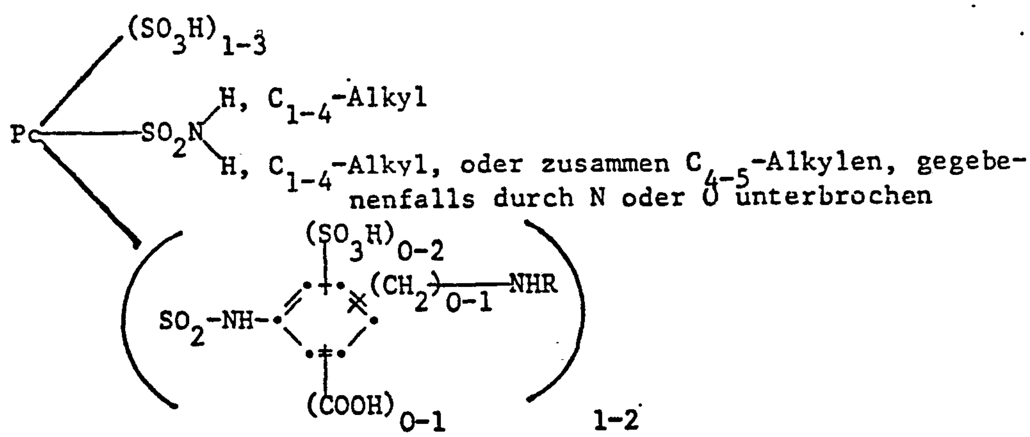

In dieser Formel steht Pc für den Cu- oder Ni-Phthalocyaninrest. Die Gesamtzahl der Substituenten am Pc-Gerüst ist dabei 4.

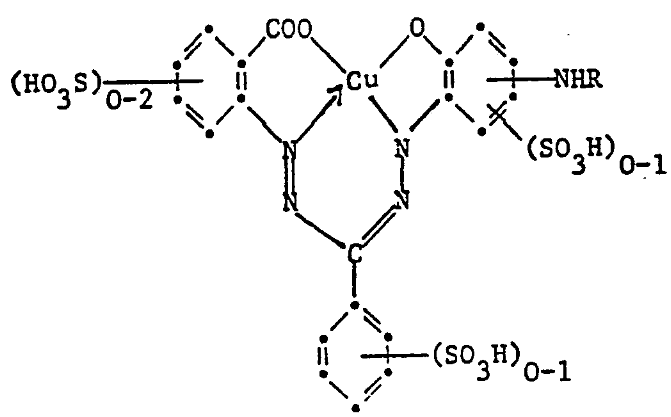

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (11) sind die folgendcn:

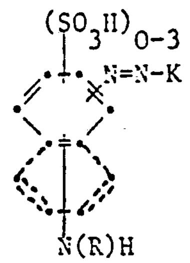

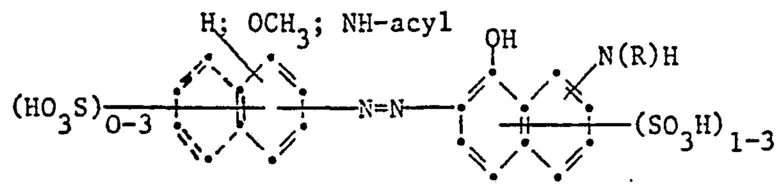

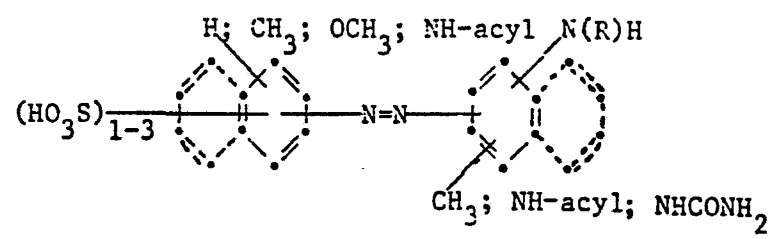

und

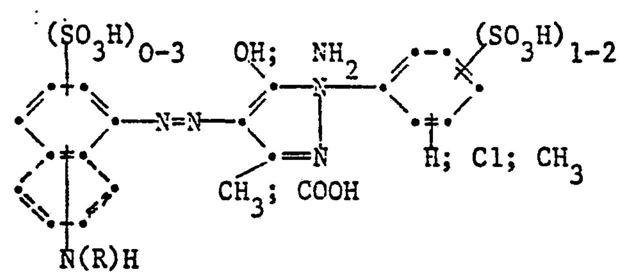

**worin K der Rest einer Kupplungskowponente der Benzol-, Naphthalinoder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metalikomplex-Azofarbstoffe der Formeln**

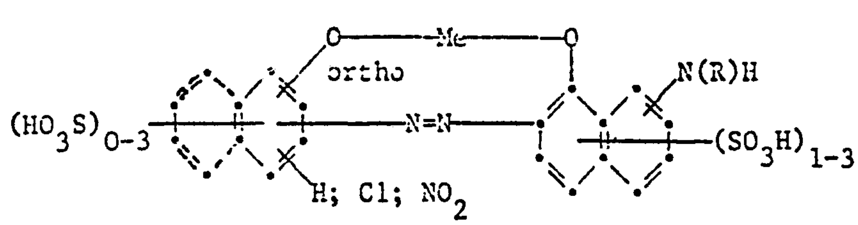

und

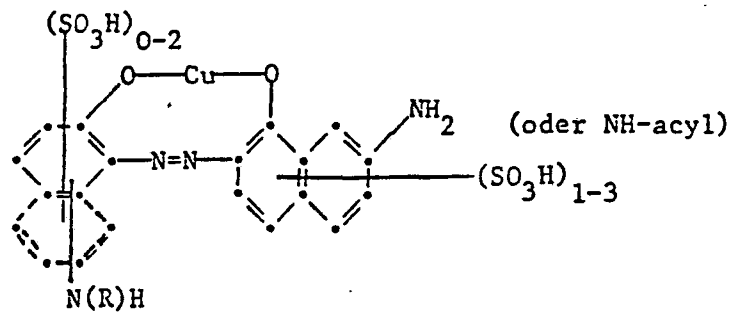

worin R und acyl die oben angegebenen Bedeutungen haben und Me für Cu, Cr oder Co steht.

2,4,6-Trifluor-s-triazin (Cyanurfluorid) oder primäre Kondensationsprodukte des 2,4,6-Trifluor-s-triazins mit den weiter unten genannten Aminen der Formel (8).

Amine der Formel (8):

1-Aminobemzol-2-(β-acetoxyäthyl)-sulfon,
1-Aminobenzol-3-(β-acetoxyäthyl)-sulfon,
1-Amino-4-methylbenzol-3-(β-acetoxyäthyl)-sulfon,
1-Aminobenzol-3-((ß-äthylcarbonyloxy)äthyl)-sulfon,
1-Amino-4-methoxybenzol-3-(β-acetoxyäthyl)-sulfon,
1-Aminobenzol-3-(β-benzoyloxyäthyl)-sulfon,
1-Aminobenzol-4-(β-acetoxyäthyl)-sulfon,
1-Amino-2-methylbenzol-5-(β-acetoxyäthyl)-sulfom,
1-Amino-2-chlorbenzol-5-(β-acetoxyäthyl)-sulfon,
1-Amino-2-methoxybenzol-5-(β-acetoxyätbyl)-sulfon,
1-Amino-2-brombenzol-5-(β-acetoxyäthyl)-sulfon,
2-AminonaPhthalin-8-(β-acetoxyäthyl)-sulfon,
2-Aminonaphthalin-8-(β-acetoxyäthyl)-sulfon-6-sulfonsäure,
1-Amino-3-(N-methyl-N-(β-acetoxyäthylsulfonyl)-amino)-benzol,
1-Amino-4-(N-methyl-N-(β-acetoxyäthylsulfonyl)-amino>-benzol,
1-Amino-4-(β-acetoxyäthylsulfonylmethyl)-benzol,
1-Aminobenzol-3-(β-tosyloxyäthyl)-sulfon,
1-Aminobenzol-3-(β-methylsulfonyloxyäthyl)-sulfon,
2-(β-Acetoxyäthylsulfonyl)-äthylamin.

Bevorzugt sind 1-Aminobenzol-3-(β-acetoxyäthyl)-sulfon und 2-(β-Acet-oxyäthylsulfonyl)-äthylamin und deren N-Methylderivate.

Die Amine der Formel (8) können nach an sich bekannten Methoden hergestellt werden, z.B. durch Veresterung von 1-Nitrobenzol-3-(β-hydroxy-äthyl)-sulfon mit Essigsäureanhydrid oder Acetylchlorid und anschliessende Reduktion der Nitrogruppe.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:

Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothiop-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfon-säure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlor-benzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol 2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3-oder -4-sulfonsäure, 1-Amino-6-äthoxybenzol-3-oder -4-sulfonsäure, 1-Amino-2,4-dimethoxybenzol-6-sulfonsäure, 1-Amino-2,5-dimethoxy-benzol-4-sulfonsäure 1-Amino-3-acetylaminobenzol-6-sulfonsäure, 1-Amino-4-acetylaminobenzol-2-sulfonsäure, 1-Amino-3-acetylawino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfon-säure, 1,4-Diaminobenzol-3-sulfonsäure, 1,4-Diaminobenzol-2,5-disul-fonsäure, 1-Amino-3- oder -4-nitrobenzol-6-sulfonsäure, 1-Amino-napthalin, 2-Aminonaphthalin, 1-Aminonapthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-amino-benzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylanino-benzol-6-sulfonsäure, 1-Hydroxy:2-amino-6-acetylaminobenzol-4-sulfonsäure, 1-Hydroxy:2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxy-naphthalin-4,8-disulfonsäure, 4-Amino-äzobenzol-3,4'-disulfonsäure, 3-Methoxy-4-amino-6-methylazobenzol-2',4'-disulfonsäure, 3-Methoxy-4-amino-6-methylazobenzol-2',5'-di-sulfonsäure.

Kupplungskomponenten:

Phenol, 1-Hydroxy-3- oder -4-methylbenzol, 1-Hydroxybenzol-4-sulfon-säure, 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6-oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2 4-disulfonsäure, 2-Hydroxy-3-aminonaphthalin-5,7-disulfonsäure 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfon-säure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxy-naphthalin-1,7-disulfonsäure, 2-Amino-8-hydroxynaphthalin-6-sulfon-säure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfon-säure, 1-Amino-5-hydroxynaphthalin-7-sulfonsäure, 1-Amino-8-hydroxy-naphthalin-3,6- bzw. -4,6-disulfonsäure, 1-Acetylamino-8-hydroxy-naphthalin-3,6- bzw. -4,6-disulfonsäure, 1-(4':Aminobenzoylamino)-8-hydroxynaphthalin-3,6- bzw. -4,6-disulfonsäure, 1-(4'-Nitrobenzoyl-amino)-8-hydroxynaphthalin-3,6- bzw. -4,6-disulfonsäure, 1-(3'-Amino-benzoylawino)-8-hydroxynaphthalin-3,6- bzw. -4,6-disulfonsäure, 1-(3,-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfo-phenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Di-sulfophenyl)-3-methyl-5-pyrazolon, 1-(2'-Methyl-4'-sulfophenyl)-5-pyrazolon-3-carbonsäure, 1-(4' 8'-Disulfonaphthyl-(2'1)-3-methyl-5-pyrazulon,1-(5',7'-Disulfonaphthyl-(2'1)-3-Methyl-5-pyrazolon, 1-(2',5'-Dichlor-4'-sulfophenyl)-3-methyl-5-pyrazolon, 3-,Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxy-pyridon-(2), 2,4,6-Triainino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfo-methyl-4-methyl-5-carbamoyl-6-hydroxypyridon-(2), N-Acetoacctylaminobenzol, 1-(N-Acetoacetylamino)-2-methoxybenzol-5-sulfonsäure, 4-Hydro-xychinolon-(2), 1-Amino-8-hydroxy-2-(phenylazo)-naphthalin-3,6-di-sulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskowponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit Wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Werfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d.h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z.B. von Wolle, Seide oder Wolle enthaltenden

Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Aus der FR-A-2.430.442 sind ähnliche Farbstoffe bekannt, die sich aber von den erfindungsgemässen Farbstoffen durch andersartige reaktive Abgangsgruppen unterscheiden.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

**Beispiel 1:**

17 84 Teile des Aminofarbstoffes der Formel

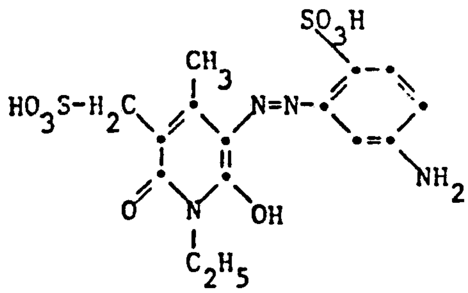

werden in 300 Teilen Wasser neutral gelöst. Man kühlt durch Zugabe von Eis auf 0-5° ab und tropft bei dieser Temperatur innert 10 Minuten 5,67 Teile 2,4,6-Trifluor-1,3,5-triazin zu, wobei man unter gleichzeitiger Zugabe von 2n Natriumhydroxidlösung den $p_H$-Wert der Reaktionslösung bei 6 bis 7 hält. Sobald chromatographisch kein Ausgangsfarbstoff mehr nachweisbar ist, werden 10,21 Teile 1-Am inobenzol-3-(β-acetoxyäthyl)-sulfon zugesetzt. Unter ständigem Neutralisieren des freiwerdenden Fluorwasserstoffs mit 2n Natriumhydroxidlösung wird ein $p_H$ von 6,0 bis 6,3 eingehalten, wobei man gleichzeitig die Temperatur innert 4 Stunden auf 20-25° ansteigen lässt. Nach beendeter Reaktion wird die Farbstofflösung klärfiltriert und durch Zugabe von Kaliumchlorid ausgesalzen, wobei man den Farbstoff der Formel

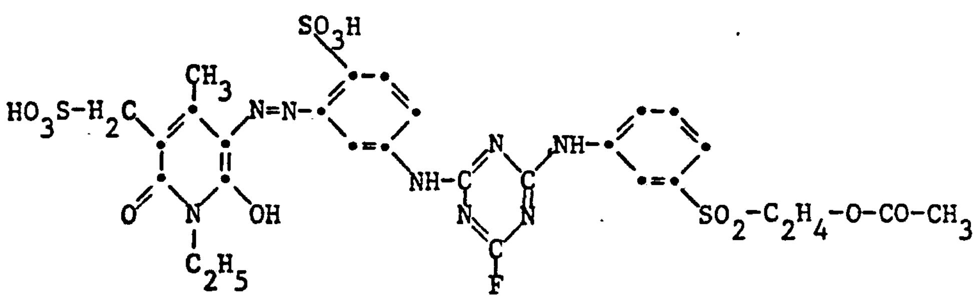

erhält, welcher abfiltriert und im Vakuum getrocknet wird. Er stellt ein gelbes Pulver dar, welches Baumwolle und regenerierte Cellulose in klaren grünstichig gelben Tönen anfärbt. Das für die Farbstoffkondensation verwandte 1-Aminobenzol-3-(β-acetoxyäthyl)-sulfon kann nach üblichen Methoden hergestellt werden, z.B. durch Veresterung von 1-Nitrobenzol-3-(β-hydroxyäthyl)-sulfon mit Essigsäureanhydrid und nachfolgender Reduktion der Nitrogruppe.

Verfährt man wie in Beispiel 1 beschrieben, verwendet jedoch anstelle des aufgeführten Aminofarbstoffes äquivalente Mengen der in nachfolgender Tabelle 1, Kolonne 1 genannten Aminofarbstoffe sowie in Kolonne 2 genannten Amine, so erhält man Reaktivfarbstoffe, welche Baumwolle in den in Kolonne 3 genannten Nuancen zu färben vermögen.

Tabelle I

| Nr. | Kolonne 1 | Kolonne 2 | Kolonne 3 |
|---|---|---|---|
| | Aminofarbstoff | Amin | Farbton auf Baumwolle |
| 1 | 2-Aminonaphthalin-1,5-disulfonsäure ⟶ 1-Amino-3-acetylaminobenzol | 1-Aminobenzol-3-(β-acetoxyäthyl)-sulfon | rotstichig gelb |
| 2 | 2-Aminonaphthalin-1,5-disulfonsäure ⟶ 3-Aminophenylharnstoff | do. | do. |
| 3 | 2-Aminonaphthalin-1,5-disulfonsäure ⟶ 1-Amino-3-hydroxymethylcarbonylaminobenzol | do. | do. |
| 4 | 2-Aminonaphthalin-5,7-disulfonsäure ⟶ 1-Amino-3-acetylaminobenzol | do. | do. |
| 5 | 2-Aminonaphthalin-5,7-disulfonsäure ⟶ 3-Aminophenylharnstoff | do. | do. |
| 6 | 2-Aminonaphthalin-4,8-disulfonsäure ⟶ 1-Amino-3-methylbenzol | do. | gelb |
| 7 | 2-Aminonaphthalin-4,8-disulfonsäure ⟶ 1-Amino-3-acetylaminobenzol | do. | do. |
| 8 | 2-Aminonaphthalin-3,6-disulfonsäure ⟶ 1-Amino-3-acetylaminobenzol | do. | rotstichig gelb |
| 9 | 2-Aminonaphthalin-3,6-disulfonsäure ⟶ 3-Aminophenylharnstoff | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 10 | 2-Aminonaphthalin-6,8-disulfonsäure ⟶ 1-Amino-3-acetylaminobenzol | 1-Aminobenzol-3-(β-acetoxyäthyl)-sulfon | rotstichig gelb |
| 11 | 2-Aminonaphthalin-6,8-disulfonsäure ⟶ 1-Amino-2-methoxynaphthalin-6-sulfonsäure | do. | do. |
| 12 | 2-Aminonaphthalin-3,6,8-trisulfonsäure ⟶ 1-Amino-3-acetylaminobenzol | do. | do. |
| 13 | 2-Aminonaphthalin-3,6,8-trisulfonsäure ⟶ 3-Aminophenylharnstoff | do. | do. |
| 14 | 2-Aminonaphthalin-3,6,8-trisulfonsäure ⟶ 1-Amino-3-methylbenzol | do. | do. |
| 15 | 2-Aminonaphthalin-4,6,8-trisulfonsäure ⟶ 1-Amino-3-methylbenzol | do. | do. |
| 16 | 2-Aminonaphthalin-4,6,8-trisulfonsäure ⟶ 1-Amino-3-acetylaminobenzol | do. | do. |
| 17 | 1-Aminobenzol-2,5-disulfonsäure ⟶ 1-Aminonaphthalin-6-sulfonsäure | do. | do. |
| 18 | 1-Aminobenzol-2,5-disulfonsäure ⟶ 1-Aminonaphthalin-6-sulfonsäure ⟶ 1-Aminonaphthalin-8-sulfonsäure | do. | rotstichig braun |

Tabelle I (Fortsetzung)

| Nr. | Kolonne 1<br>Aminofarbstoff | Kolonne 2<br>Amin | Kolonne 3<br>Farbton auf Baumwolle |
|---|---|---|---|
| 19 | 1-Aminonaphthalin-2,5,7-trisulfonsäure ⟶ 1-Aminonaphthalin-6-sulfonsäure ⟶ 1-Aminonaphthalin-8-sulfonsäure | 1-Aminobenzol-3-(β-acetoxyäthyl)-sulfon | violettstichig braun |
| 20 | 1-Aminonaphthalin-2,5,7-trisulfonsäure ⟶ 1-Amino-2,5-dimethylbenzol ⟶ 1-Aminonaphthalin-6-sulfonsäure | do. | rotstichig braun |
| 21 | 4-Aminoazobenzol-3,4'-disulfonsäure ⟶ 1-Aminonaphthalin-6-sulfonsäure | do. | gelbbraun |
| 22 | 1,4-Diaminobenzol-2,5-disulfonsäure ⟶ 1-Aethyl-3-sulfomethyl-4-methyl-6-hydroxy-pyridon-(2)-5-carbonsäureamid | 1-Amino-4-methylbenzol-3-(β-acetoxyäthyl)-sulfon | gelb |
| 23 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | 1-Aminobenzol-3-[(β-äthylcarbonyloxy)äthyl]-sulfon | do. |
| 24 | 1-Amino-3-acetylaminobenzol-6-sulfonsäure ⟶ 1-Aethyl-3-aminocarbonyl-4-methyl-6-hydroxy-pyridon-(2) (verseift) | do. | do. |
| 25 | 1-Amino-3-acetylaminobenzol-6-sulfonsäure ⟶ 1-(2',5'-Dichlor-4'-sulfophenyl)-3-methyl-5-pyrazolon (verseift) | do. | do. |

Tabelle I (Fortsetzung)

| Nr. | Kolonne I | Kolonne 2 | Kolonne 3 |
|---|---|---|---|
| | Aminofarbstoff | Amin | Farbton auf Baumwolle |
| 26 | 1-Amino-3-acetylaminobenzol-6-sulfonsäure ⟶ 1-(2',5'-Disulfophenyl)-3-methyl-5-pyrazolon (verseift) | 1-Aminobenzol-3-(β-acetoxyäthyl)-sulfon | gelb |
| 27 | 1-Amino-3-acetylaminobenzol-6-sulfonsäure ⟶ 1-(4'-Sulfophenyl)-5-pyrazolon-3-carbonsäure (verseift) | do. | do. |
| 28 | 1-Amino-3-acetylaminobenzol-6-sulfonsäure ⟶ 1-(2'-Methyl-4'-sulfophenyl)-5-pyrazolon-3-carbonsäure (verseift) | do. | do. |
| 29 | 1-Amino-3-acetylaminobenzol-6-sulfonsäure ⟶ 1-(4',8'-Disulfonaphthyl-[2'])-3-methyl-5-pyrazolon (verseift) | do. | do. |
| 30 | 1-Aminobenzol-2,5-disulfonsäure ⟶ 1-(3'-Aminophenyl)-3-methyl-5-pyrazolon | do. | do. |
| 31 | 1-Aminobenzol-2,5-disulfonsäure ⟶ 2-Acetylamino-5-hydroxynaphthalin-7-sulfonsäure (verseift) | do. | orange |
| 32 | 1-Aminobenzol-2-sulfonsäure ⟶ 2-Amino-5-hydroxynaphthalin-1,7-disulfonsäure | do. | do. |

Tabelle I (Fortsetzung)

| Nr. | Kolonne I | Kolonne 2 | Kolonne 3 |
|---|---|---|---|
| | Aminofarbstoff | Amin | Farbton auf Baumwolle |
| 33 | 2-Aminonaphthalin-1,5-disulfonsäure ⟶ 2-Acetylamino-5-hydroxynaphthalin-7-sulfonsäure (verseift) | 1-Aminobenzol-3-(β-acetoxyäthyl)-sulfon | orange |
| 34 | 2-Aminonaphthalin-3,6,8-trisulfonsäure ⟶ 2-Acetylamino-5-hydroxynaphthalin-7-sulfonsäure (verseift) | do. | do. |
| 35 | 2-Aminonaphthalin-1,5,7-trisulfonsäure ⟶ 1-Acetylamino-5-hydroxynaphthalin-7-sulfonsäure (verseift) | do. | do. |
| 36 | 1-Amino-4-methoxybenzol-2,5-disulfonsäure ⟶ 2-Amino-5-hydroxynaphtalin-7-sulfonsäure | do. | scharlach |
| 37 | 1-Amino-4-methoxybenzol-2-sulfonsäure ⟶ 2-Amino-5-hydroxynaphthalin-7-sulfonsäure | do. | do. |
| 38 | 1-Aminobenzol-2-sulfonsäure ⟶ 1-(4'-Nitrobenzoylamino)-8-hydroxynaphthalin-3,6-disulfonsäure (reduziert) | do. | rot |
| 39 | 1-Aminobenzol-2,5-disulfonsäure ⟶ 1-(3'-Nitrobenzoylamino)-8-hydroxynaphthalin-4,6-disulfonsäure (reduziert) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 40 | 2-Aminonaphthalin-1,5-disulfonsäure ⟶ 1-(4'-Nitrobenzoylamino)-8-hydroxynaphthalin-3,6-disulfonsäure (reduziert) | 1-Aminobenzol-3-(β-acetoxyäthyl)-sulfon | rot |
| 41 | 1-Hydroxy-2-aminobenzol-4-sulfonsäure ⟶ 2-Amino-5-hydroxynaphthalin-7-sulfonsäure (Cu-Komplex) | do. | rubin |
| 42 | 1-Hydroxy-2-aminobenzol-4,6-disulfonsäure ⟶ 2-Amino-5-hydroxynaphthalin-7-sulfonsäure (Cu-Komplex) | do. | do. |
| 43 | 1-Hydroxy-2-aminobenzol-4,6-disulfonsäure ⟶ 2-Aethylamino-5-hydroxynaphthalin-7-sulfonsäure (Cu-Komplex) | 1-Amino-4-methoxybenzol-3-(β-acetoxyäthyl)-sulfon | do. |
| 44 | 1-Hydroxy-2-aminobenzol-4,6-disulfonsäure ⟶ 2-Amino-8-hydroxynaphthalin-3,6-disulfonsäure (Cu-Komplex) | do. | do. |
| 45 | 1-Hydroxy-2-aminobenzol-4,6-disulfonsäure ⟶ 1-Amino-8-hydroxynaphthalin-3,6-disulfonsäure (Cu-Komplex) | do. | violett |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 46 | 1-Hydroxy-2-aminobenzol-4,6-disulfonsäure ⟶ 1-Amino-8-hydroxynaphthalin-4,6-disulfonsäure (Cu-Komplex) | 1-Aminobenzol-3-(β-acetoxyäthyl)-sulfon | violett |
| 47 | 1-Hydroxy-2-amino-4-acetylaminobenzol-6-sulfonsäure ⟶ 1-Amino-8-hydroxynaphthalin-2,4-disulfonsäure (Cu-Komplex) (verseift) | do. | blau |
| 48 | 1-Hydroxy-2-amino-6-acetylaminobenzol-4-sulfonsäure ⟶ 1-Amino-8-hydroxynaphthalin-2,4-disulfonsäure, verseift (Cu-Komplex) | do. | do. |
| 49 | 1-Amino-2-hydroxy-6-nitronaphthalin-4-sulfonsäure ⟶ 1-Amino-8-hydroxynaphthalin-2,4-disulfonsäure, reduziert (Cu-Komplex) | do. | do. |
| 50 | 1-Amino-2-hydroxy-6-nitronaphthalin-4-sulfonsäure ⟶ 1-Amino-8-hydroxynaphthalin-2,4,6-trisulfonsäure, reduziert (Cu-Komplex) | do. | do. |
| 51 | 2-Amino-1-hydroxynaphthalin-4,8-disulfonsäure ⟶ 1-Amino-8-hydroxynaphthalin-3,6-disulfonsäure (Cu-Komplex) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 52 | 2-Aminonaphthalin-4,8-disulfonsäure ⟶ 2-Hydroxy-3-aminonaphthalin-5,7-disulfonsäure (oxydierend gekupfert) | 1-Aminobenzol-3-(β-acetoxyäthyl)-sulfon | blau |
| 53 | 3-Methoxy-4-amino-6-methylazobenzol-2',5'-disulfonsäure ⟶ 2-Methylamino-5-hydroxynaphthalin-7-sulfonsäure (entmethylierend gekupfert) | do. | marineblau |
| 54 | 3-Methoxy-4-amino-6-methylazobenzol-2',4'-disulfonsäure ⟶ 2-Amino-5-hydroxynaphthalin-1,7-disulfonsäure (entmethylierend gekupfert) | do. | do. |
| 55 | 1-Amino-3-acetylaminobenzol-6-sulfonsäure ⟶ 1-Amino-8-hydroxy-2-(4'-sulfonphenylazo)-naphthalin-3,6-disulfonsäure (verseift) | do. | blau |
| 56 | 1-Amino-4-(3'-amino-2',4',6'-trimethylphenylamino)-anthrachinon-2,5'-disulfonsäure | do. | do. |
| 57 | 1-Amino-4-(2',6'-dimethyl-3'-aminomethyl-phenylamino)-anthrachinon-2,5'-disulfonsäure | do. | rotstichig blau |
| 58 | 1-Amino-4-(4'-methyl-2'-aminomethyl-phenylamino)-anthrachinon-2,6'-disulfonsäure | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 59 | 1-Amino-4-(5'-amino-phenylamino)-anthrachinon-2,2',4'-trisulfonsäure | 1-Aminobenzol-3-(β-acetoxyäthyl)-sulfon | blau |
| 60 | 1-Amino-4-(4'-amino-phenylamino)-anthrachinon-2,3'-disulfonsäure | do. | do. |
| 61 | 1-Amino-4-(4'-amino-phenylamino)-anthrachinon-2,2'-disulfonsäure | do. | do. |
| 62 | 1-Amino-4-(3'-amino-phenylamino)-anthrachinon-2,4'-disulfonsäure | do. | do. |
| 63 | 1-Amino-4-(2'-methyl-3'-amino-phenylamino)-anthrachinon-2,5'-disulfonsäure | do. | do. |
| 64 | 1-Amino-4-(2'-methyl-3'-amino-phenylamine)-anthrachinon-2,6,5'-trisulfonsäure | do. | grünstichig blau |
| 65 | 1-Amino-4-(4'-amino-cyclohexylamino)-anthrachinon-2-sulfonsäure | do. | blau |
| 66 | N-(2-Carboxy-4-sulfophenyl)-N'-(2'-hydroxy-3'-amino-5'-sulfophenyl)-ms-phenylformazan (Cu-Komplex) | do. | do. |
| 67 | N-(2-Carboxy-5-sulfophenyl)-N'-(2'-hydroxy-3'-amino-5'-sulfophenyl)-ms-phenylformazan (Cu-Komplex) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 68 | N-(2-Carboxy-4-sulfophenyl)-N'-(2'-hydroxy-3'-amino-5'-sulfophenyl)-ms-(2"-chlor-5"-sulfophenyl)-formazan (Cu-Komplex) | 1-Aminobenzol-3-(β-acetoxyäthyl)-sulfon | blau |
| 69 | N-(2-Carboxy-4-aminophenyl)-N'-(2'-hydroxy-3',5'-disulfophenyl)-ms-(3"-sulfophenyl)-formazan (Cu-Komplex) | do. | do. |
| 70 | N-(2-Carboxy-5-sulfophenyl)-N'-(2'-hydroxy-3',5'-disulfophenyl)-ms-(3"-aminophenyl)-formazan (Cu-Komplex) | do. | grünstichig blau |
| 71 | N-(2-Hydroxy-3-amino-5-sulfophenyl)-N'-(2'-hydroxy-4'-sulfophenyl)-ms-(2"-sulfophenyl)-formazan (Cu-Komplex) | do. | marineblau |
| 72 | N-(2-Hydroxy-5-sulfophenyl)-N'-(2'-hydroxy-3',5'-disulfophenyl)-ms-(4"-aminophenyl)-formazan (Cu-Komplex) | do. | blau |
| 73 | N-(2-Hydroxy-5-amino-3-sulfophenyl)-N'-(2',5'-disulfophenyl)-ms-phenylformazan (Cu-Komplex) | do. | do. |
| 74 | N-(2-Hydroxy-4,6-disulfophenyl)-N'-(2',4'-disulfophenyl)-ms-(3"-aminophenyl)-formazan (Cu-Komplex) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 75 | N-(2-Hydroxy-4-sulfophenyl)-N'-(4'-amino-2'-sulfophenyl)-ms-(4"-chlor-3"-sulfophenyl)-formazan (Cu-Komplex) | 1-Aminobenzol-3-(β-acetoxyäthyl)-sulfon | blau |
| 76 | 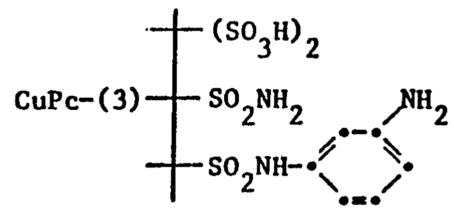 | do. | türkisblau |
| 77 | 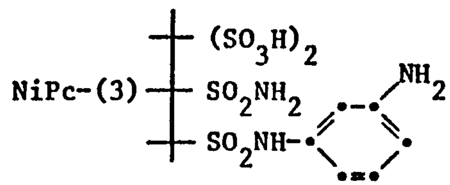 | do. | do. |
| 78 | 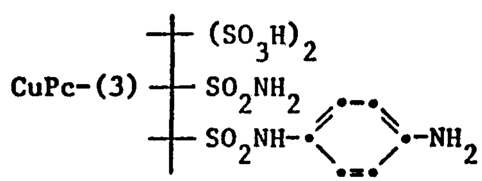 | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 79 | CuPc(3) 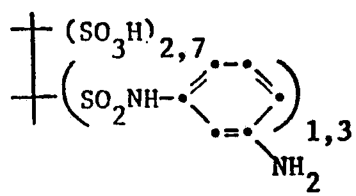 | 1-Aminobenzol-3-(β-acet-oxyäthyl)-sulfon | türkisblau |
| 80 | CuPc-(3) 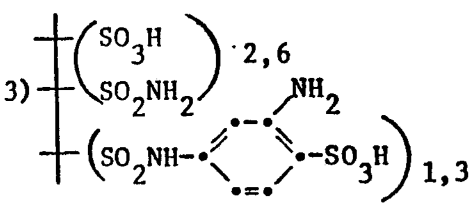 | do. | do. |
| 81 | CuPc-(4) 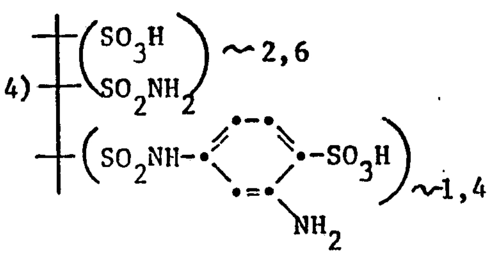 | do. | do. |

Tabelle I (Fortsetzung)

| Nr. | Kolonne 1 | Kolonne 2 | Kolonne 3 |
| --- | --- | --- | --- |
| | Aminofarbstoff | Amin | Farbton auf Baumwolle |
| 82 | CuPc-(4) 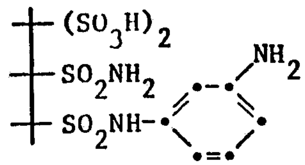 | 1-Aminobenzol-3-(β-acetoxyäthyl)-sulfon | türkisblau |
| 83 | NiPc-(4) 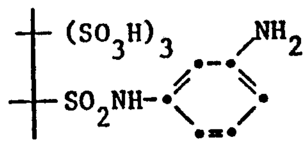 | do. | do. |
| 84 | CuPc-(3) 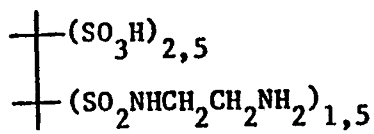 | do. | do. |
| 85 | CuPc-(3) 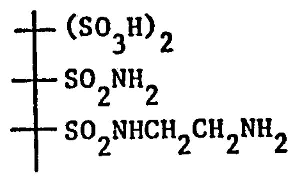 | do. | do. |
| 86 | 2-Aminonaphthalin-6,8-disulfonsäure ⟶ 1-Amino-3-acetylaminobenzol | 1-Amino-2-methylbenzol-5-(β-acetoxyäthyl)-sulfon | rotstichig gelb |
| 87 | do. | 1-Amino-2-chlorbenzol-5-(β-acetoxyäthyl)-sulfon | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 88 | 2-Aminonaphthalin-6,8-disulfonsäure ⟶ 1-Amino-3-acetylaminobenzol | 1-Amino-4-methoxybenzol-5-(β-acetoxyäthyl)-sulfon | rotstichig gelb |
| 89 | do. | 2-Aminonaphthalin-8-(β-acetoxyäthyl)-sulfon | do. |
| 90 | 2-Aminonaphthalin-3,6,8-trisulfonsäure ⟶ 3-Aminophenylharnstoff | 1-Amino-2-methoxybenzol-5-(β-acetoxyäthyl)-sulfon | do. |
| 91 | do. | 1-Amino-2-brombenzol-5-(β-acetoxyäthyl)-sulfon | do. |
| 92 | do. | 1-Amino-4-methylbenzol-5-(β-acetoxyäthyl)-sulfon | do. |
| 93 | do. | 1-Amino-2-methoxybenzol-5-(β-acetoxyäthyl)-sulfon | do. |
| 94 | do. | 2-Aminonaphthalin-8-(β-acetoxyäthyl)-sulfon | do. |
| 95 | do. | 2-Aminonaphthalin-8-(β-acetoxyäthyl)-sulfon-6-sulfonsäure | do. |
| 96 | do. | 1-Amino-3-[N-methyl-N-(β-acetoxyäthylsulfonyl)-amino]-benzol | do. |
| 97 | do. | 1-Amino-4-[N-methyl-N-(β-acetoxyäthylsulfonyl)-amino]-benzol | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 98 | 1-Amino-3-acetylaminobenzol-6-sulfonsäure ⟶ 1-Amino-8-hydroxy-2-(4'-sulfophenylazo)-naphthalin-3,6-disulfonsäure | 1-Amino-2-methylbenzol-5-(β-acetoxyäthyl)-sulfon | blau |
| 99 | do. | 1-Amino-2-methoxybenzol-5-(β-acetoxyäthyl)-sulfon | do. |
| 100 | do. | 1-Amino-4-methoxybenzol-5-(β-acetoxyäthyl)-sulfon | do. |
| 101 | do. | 1-Amino-2-chlorbenzol-5-(β-acetoxyäthyl)-sulfon | do. |
| 102 | do. | 2-Aminonaphthalin-8-(β-acetoxyäthyl)-sulfon | do. |
| 103 | 1,4-Diaminobenzol-2,5-disulfonsäure ⟶ 1-Aethyl-3-sulfomethyl-4-methyl-6-hydroxypyridon-(2)-5-carbonamid | 1-Amino-4-β-acetoxyäthylsulfonylmethylbenzol | gelb |
| 104 | 1-Amino-3-acetylaminobenzol-6-sulfonsäure ⟶ 1-(4'-Sulfophenyl)-3-methyl-5-pyrazolon | do. | do. |
| 105 | 2-Aminonaphthalin-3,6,8-trisulfonsäure ⟶ 3-Aminophenylharnstoff | do. | goldgelb |
| 106 | 2-Aminonaphthalin-1-sulfonsäure ⟶ 1-Amino-8-hydroxynaphthalin-3,6-disulfonsäure | do. | rot |

**Beispiel 2:**

Arbeitet man wie in Beispiel 1 beschrieben, ersetzt jedoch das dort verwendete 1-Aminobenzol-3-(β-acetoxyäthyl)-sulfon durch 12,8 Teile 1-Aminobenzol-3-(β-benzoyloxyäthyl)-sulfon, so wird der Farbstoff der Formel

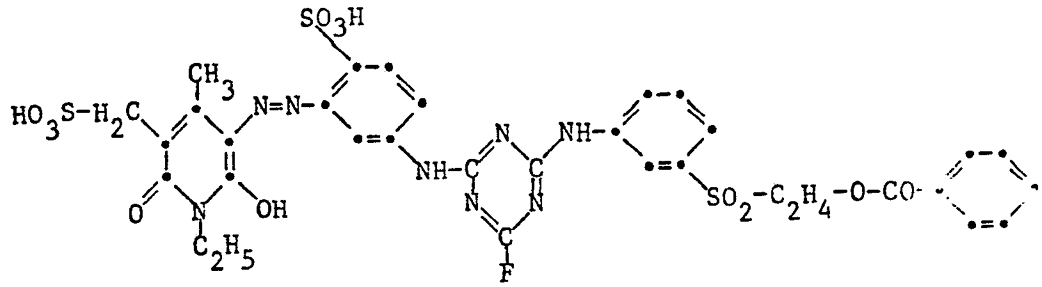

als gelbes Pulver erhalten, das Baumwolle in grünstichig gelben Tönen färbt.

Das für die Farbstoffkondensation verwandte 1-Aminobenzol-3-(β-benzol-oxyäthyl)-sulfon kann nach üblichen Methoden hergestellt werden, z.B. durch Veresterung von 1-Nitrobenzol-3-(β-hydroxyäthyl)-sulfon mit Benzoylchlorid und nchfolgender Reduktion der Nitrogruppe.

**Beispiel 3:**

28 Teile des Aminodisazofarbstoffes der Formel

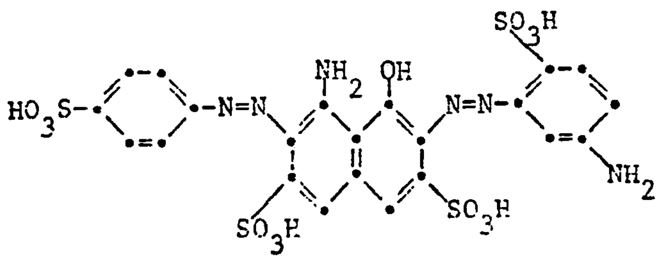

werden in 300 ml Wasser neutral gelöst. Man kühlt durch Zugabe von Eis auf 0-2° ab und tropft bei dieser Terperatur innert 10 Minuten 5,67 Teile 2,4,6-Trifluor-1,3,5-triazin zu, wobei der $p_H$-Wert unter gleichzeitiger Zugabe von 2n Natriumhydroxidlösung bei 6,5-7,0 gehalten wird. Man rührt nach 30 Minuten nach, stellt den $p_H$-Wert von 6,0 ein und setzt dann 10,21 Teile 1-Aminobenzol-4-(β-acetoxyäthyl)-sulfon zu. Danach lässt man die Temperatur innert 3 Stunden zunächst auf 20° und innert weiterer 2 Stunden auf 30° ansteigen, wobei während dieser Zeit der $p_H$-Wert durch Zugabe von 2n Natriumhydroxidlösung bei 6,0-6,25 gehalten wird. Nach Klärfiltration der Farbstofflösung wird mit Kaliumchlorid ausgesalzen, abfiltriert und im Vakuum getrocknet, wobei der Farbstoff der Formel

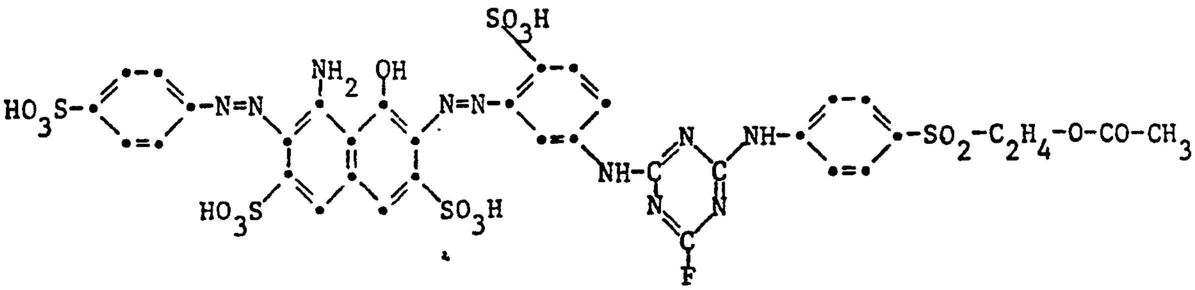

als dunkelblaues Pulver erhalten wird, welches Baumwolle und regenerierte Cellulose in marineblauen Tönen färbt.

Verfährt man wie in Beispiel 3 beschrieben und verwendet äquivalente Mengen der in nachfolgender Tabelle II, Kolonne 1 genannten Aminoazofarbstoffe sowie der in Kolonne 2 genannten Amine, so erhält man Reaktivfarbstoffe, welche Baumwolle in den in Kolonne 3 genannten Nuancen zu färben vermögen.

Tabelle II

| Nr. | Kolonne 1 | Kolonne 2 | Kolonne 3 |
|---|---|---|---|
| | Aminoazofarbstoff | Amin | Farbton auf Baumwolle |
| 1 | 1-Aminobenzol-2-sulfonsäure ⟶ 1-Amino-8-hydroxynaphthalin-3,6-disulfonsäure | 1-Aminobenzol-4-(β-acetoxyäthyl)-sulfon | rot |
| 2 | 1-Aminobenzol-2-sulfonsäure ⟶ 1-Amino-8-hydroxynaphthalin-4,6-disulfonsäure | do. | do. |
| 3 | 1-Amino-4-carboxybenzol-2-sulfonsäure ⟶ 1-Amino-8-hydroxynaphthalin-3,6-disulfonsäure | do. | do. |
| 4 | 1-Amino-4-methylbenzol-2-sulfonsäure ⟶ 1-Amino-8-hydroxynapthalin-3,6-disulfonsäure | do. | do. |
| 5 | 1-Aminobenzol-2,5-disulfonsäure ⟶ 1-Amino-8-hydroxynaphthalin-3,6-disulfonsäure | do. | do. |
| 6 | 2-Aminonaphthalin-1-sulfonsäure ⟶ 1-Amino-8-hydroxynaphthalin-3,6-disulfonsäure | do. | do. |
| 7 | 2-Aminonaphthalin-1,5-disulfonsäure ⟶ 1-Amino-8-hydroxynaphthalin-3,6-disulfonsäure | do. | do. |
| 8 | 2-Aminonaphthalin-1,5,7-trisulfonsäure ⟶ 1-Amino-8-hydroxynaphthalin-6-sulfonsäure | do. | do. |
| 9 | 1-Aminobenzol-2-sulfonsäure ⟶ 1-Amino-8-hydroxynaphthalin-3,6-disulfonsäure | 2-(β-Acetoxyäthylsulfonyl)-äthylamin | do. |

Tabelle II (Fortsetzung)

| Nr. | Kolonne 1 | Kolonne 2 | Kolonne 3 |
|---|---|---|---|
| | Aminazofarbstoff | Amin | Farbton auf Baumwolle |
| 10 | 2-Aminonaphthalin-1-sulfonsäure ⟶ 1-Amino-8-hydroxynaphthalin-4,6-disulfonsäure | 2-(β-Acetoxyäthylsulfonyl)-äthylamin | rot |
| 11 | 1-Aminobenzol-2,5-disulfonsäure ⟶ 1-Amino-8-hydroxynaphthalin-3,6-disulfonsäure | do. | do. |
| 12 | 2-Aminonaphthalin-1,5-disulfonsäure ⟶ 1-Amino-3-acetylaminobenzol | 1-Aminobenzol-3-(β-tosyloxyäthyl)-sulfon | rotstichig gelb |
| 13 | 2-Aminonaphthalin-1,5-disulfonsäure ⟶ 3-Aminophenylharnstoff | do. | do. |
| 14 | 2-Aminonaphthalin-1,5-disulfonsäure ⟶ 1-Amino-3-hydroxymethylcarbonylaminobenzol | do. | do. |
| 15 | 2-Aminonaphthalin-5,7-disulfonsäure ⟶ 1-Amino-3-acetylaminobenzol | do. | do. |
| 16 | 2-Aminonaphthalin-5,7-disulfonsäure ⟶ 3-Aminophenylharnstoff | do. | do. |
| 17 | 2-Aminonaphthalin-1,5-disulfonsäure ⟶ 1-Amino-3-acetylaminobenzol | 1-Aminobenzol-3-(β-methylsulfonyloxyäthyl)-sulfon | do. |
| 18 | 2-Aminonaphthalin-1,5-disulfonsäure ⟶ 3-Aminophenylharnstoff | do. | do. |

Tabelle II (Fortsetzung)

| Nr. | Kolonne 1 | Kolonne 2 | Kolonne 3 |
|---|---|---|---|
| | Aminoazofarbstoff | Amin | Farbton auf Baumwolle |
| 19 | 2-Aminonaphthalin-1,5-disulfonsäure ⟶ 1-Amino-3-hydroxymethylcarbonylaminobenzol | 1-Aminobenzol-3-(β-methylsulfonyloxyäthyl)-sulfon | rotstichig gelb |
| 20 | 2-Aminonaphthalin-5,7-disulfonsäure ⟶ 1-Amino-3-acetylaminobenzol | do. | do. |
| 21 | 2-Aminonaphthalin-5,7-disulfonsäure ⟶ 3-Aminophenylharnstoff | do. | do. |

**Beispiel 4:**

16,1 Teile 1-Aminobenzol-5-β-acetoxyäthylsulfon-2-sulfon-säure werden mit 0,6 Teilen sekundärem Natriumphosphat in 300 Teilen Wasser bei pH 6 suspendiert und bei 0-2° unter kräftigem Rühren mit 7,1 Teilen 2,4,6-Trifluor-1,3,5-triazin versetzt. Gleichzeitig wird mit 2n Natriumcarbonatlösung ein pH-Wert von 6 gehalten. Nach beendigter Kondensation gibt man die Reaktionsmischung bei 0-2° und einem pH-Wert von 6 zu einer Lösung von 25,8 Teilen 2-(2'-Ureido-4'-amino-phenylazo)-naphthalin-3,6,8-trisulfonsäure in 200 Teilen Wasser. Unter stetem Neutralisieren des freiwerdenden Fluorwasserstoffs mit 2n Natriumcarbonatlösung Wird die Temperatur allmählich auf 25° erhöht. Nach beendigter Reaktion wird der Reaktivfarbstoff der Formel

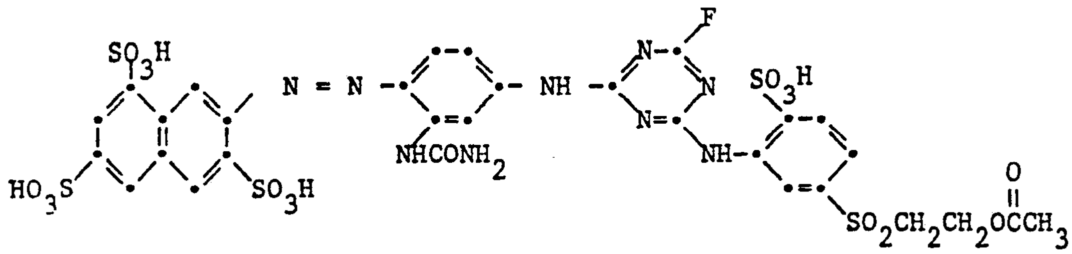

ausgesalzen, isoliert und getrocknet. Man erhält ein orange-farbenes Pulver, das zum Färben und Bedrucken von Baumwolle nach den für Reaktivfarbstoffe üblichen Verfahren bervorragend geeignet ist.

Gleichfalls wertvolle Farbstoffe werden erhalten, wenn man nach den Angaben des Beispiels 4 verfährt, jedoch die in Kolonne 1 der Tabelle III aufgeführten Aminofarbstoffe mit dem primären Kondensationsprodukt aus 2,4,6-Trifluor-1,3,5-triazin und den in Kolonne 2 genannten Aminen umsetzt, wobei Reaktivfarbstoffe resultieren, deren Farbtöne in Kolonne 3 genannt sind.

Tabelle III

| Nr. | Kolonne 1 | Kolonne 2 | Kolonne 3 |
|---|---|---|---|
| | Aminofarbstoff | Amin | Farbton auf Baumwolle |
| 1 | 2-Aminonaphthalin-3,6,8-trisulfonsäure → 3-Aminophenylharnstoff | 1-Aminobenzol-4-(β-acetoxyäthyl)-sulfon-2-sulfonsäure | rotstichig gelb |
| 2 | " | 1-Amino-2-methoxybenzol-4-(β-acetoxyäthyl)-sulfon | " " |
| 3 | " | 1-Amino-2,5-dimethoxybenzol-4-(β-acetoxyäthyl)-sulfon | " " |
| 4 | " | 1-Amino-2-methylbenzol-4-(β-acetoxyäthyl)-sulfon | " " |
| 5 | " | 1-Amino-2-chlorbenzol-4-(β-acetoxyäthyl)-sulfon | " " |
| 6 | " | 1-Aminobenzol-2-(β-acetoxyäthyl)-sulfon | " " |
| 7 | " | 1-Amino-2-methoxy-5-chlorbenzol-4-(β-acetoxyäthyl)-sulfon | " " |
| 8 | " | 1-Aminonaphthalin-4-(β-acetoxyäthyl)-sulfon | " " |
| 9 | " | 2-Aminonaphthalin-6-(β-acetoxyäthyl)-sulfon-1-sulfonsäure | " " |

Tabelle III (Fortsetzung)

| Nr. | Kolonne 1 | Kolonne 2 | Kolonne 3 |
|---|---|---|---|
| | Aminofarbstoff | Amin | Farbton auf Baumwolle |
| 10 | 2-Aminonaphthalin-6,8-disulfonsäure → 1-Amino-3-acetylaminobenzol | 1-Aminobenzol-5-(β-acetoxyäthyl)-sulfon-2,4-disulfonsäure | rotstichig gelb |
| 11 | 1-Aminobenzol-2-sulfonsäure → 2-Acetylamino-5-hydroxynaphthalin-7-sulfonsäure, verseift | do. | orange |
| 12 | 2-Aminonaphthalin-1,5-disulfonsäure → 2-Acetylamino-5-hydroxy-naphthalin-7-sulfonsäure, verseift | do. | do. |
| 13 | 1-Amino-4-methoxybenzol-2-sulfonsäure → 2-Amino-5-hydroxynaphthalin-7-sulfonsäure | do. | scharlach |
| 14 | 2-Aminonaphthalin-1,5-disulfonsäure → 1-(4'-Nitrobenzoylamino)-8-hydroxynaphthalin-3,6-disulfonsäure, reduziert | 1-Aminobenzol-4-(β-acetoxyäthyl)-sulfon-2-sulfonsäure | rot |
| 15 | 1-Amino-2-hydroxy-6-nitronaphthalin-4-sulfonsäure → 1-Amino-8-hydroxy-naphthalin-2,4-disulfonsäure, reduziert, Cu-Komplex | 1-Aminobenzol-5-(β-acetoxyäthyl)-sulfon-2,4-disulfonsäure | blau |

Tabelle III (Fortsetzung)

| Nr. | Kolonne 1<br>Aminofarbstoff | Kolonne 2<br>Amin | Kolonne 3<br>Farbton auf Baumwolle |
|---|---|---|---|
| 16 | N-(2-Carboxy-5-sulfophenyl)-N'-(2'-hydroxy-3'-amino-5'-sulfophenyl)-ms-phenylformazan, Cu-Komplex | 1-Aminobenzol-5-(β-acetoxyäthyl)-sulfon-2,4-disulfonsäure | blau |
| 17 | 1-Amino-3-acetylaminobenzol-6-sulfonsäure ⟶ 1-Amino-8-hydroxy-(2'-sulfophenylazo)-naphthalin-3,6-disulfonsäure, verseift. | 1-Aminobenzol-5-(β-acetoxyäthyl)-sulfon-2-sulfonsäure | do. |
| 18 | do. | 1-Amino-2-methoxybenzol-4-(β-acetoxyäthyl)-sulfon | do. |
| 19 | do. | 1-Amino-2,5-dimethoxybenzol-4-(β-acetoxyäthyl)-sulfon | do. |
| 20 | do. | 1-Aminobenzol-2-(β-acetoxyäthyl)-sulfon | do. |
| 21 | do. | 1-Aminobenzol-4-(β-acetoxyäthyl)-sulfon-2-sulfonsäure | do. |
| 22 | do. | 1-Aminonaphthalin-4-(β-acetoxyäthyl)-sulfon | do. |
| 23 | do | 2-Aminonaphthalin-6-(β-acetoxyäthyl)-sulfon-1-sulfonsäure | do. |

**Beispiel 5: Herstellung von 2-(β-acetoxyäthylsulfonyl)-äthylamin**

**a) Cyanmethyl-2-oxäthylsulfid**

In ein Gemisch aus 249,6 g (3,2 Mol) 2-Mercaptoäthanol. 382 g wasserfreier Soda und 1200 ml Aethanol lässt man unter äusserer Kühlung bei einer Temperatur von 40 - 45° 226,5 g (3,0 Mol) Chloracetonitril innert 45 Minuten zutropfen. Man rührt das Reaktionsgemisch 12 Stunden bei Raumtemperatur nach, filtriert von ausgefallenen anorganischen Salzen ab und wäscht diese mit 500 ml Alkohol nach. Nach Abziehen des Alkohols im Vakuum lässt sich durch gaschromatographische Bestimmung ein Umsatz von 90,3 % d. Theorie ermitteln.

Durch Hochvakuumdestillation wird das Cyanmethyl-2-oxäthylsulfid mit einem Kp. 105 - 108°/0,1 Torr als farblose Flüssigkeit erhalten. IR (Film): 2250 $cm^{-1}$ (-CN).

**b) Cyanmethyl-2-oxäthylsulfon**

352 g(3,0 Mol) Cyanmethyl-2-oxäthylsulfid werden zusammen mit 50 g Natriumacetat in 600 ml Wasser vorgelegt und mit einer Suspension von 3 g Wolfram-VI-oxid in 100 ml Wasser versetzt (zur Aktivierung der Katalysator-Suspension stellt man unter Rühren mittels Zusatz von 3 ml konzentrierter Natriumhydroxidlösung zunächst alkalisch, danach mittels Essigsäure wieder in einen pH-Bereich von 4,5 - 6,0 zurück). Unter gutem Rühren tropft man innert 2 Stunden bei 50 - 60° unter Aussenkühlung 516 ml einer 35 %igen wässrigen Wasserstoffperoxidlösung zu, wobei man die Reaktionstemperatur gegen Ende der Zutropfdauer auf 85 - 90° ansteigen lässt. Man rührt weitere 5 Stunden bei 70 - 75° unter permanentem geringen Wasserstoffperoxid-Ueberschuss nach, wobei weitere 27 ml der wässrigen 35 %igen Wasserstoffperoxid-Lösung benötigt werden. Danach lässt man auf Raumtemperatur abkühlen, klärt die Lösung mittels Filtration und engt die wässrige Lösung im Vakuum ein.

Es werden 469 g Cyanmethyl-2-oxäthylsulfon erhalten.

IR (Film): 2260 $cm^{-1}$ (-CN).

**c) Cyanmethyl-2-acetoxyäthylsulfon**

447 g (3,0 Mol) Cyanmethyl-2-oxäthylsulfon werden zusammen mit 324 g Essigsäureanhydrid während 30-Minuten bei 55 - 60° verrührt. Danach wird der grösste Teil der entstandenen Essigsäure innert 2 Stunden über eine kurze Kolonne unter Wasserstrahlvakuum abdestilliert. Letzte Reste an Essigsäure sowie wenig überschüssiges Essigsäureanhydrid entfernt an mittels Hochvakuum, worauf ein dickflüssiges dunkel gefärbtes Oel erhalten wird.

Das Rohprodukt lässt sich gegebenenfalls durch Aufnehmen in Chloroform und Auswaschen der organischen Lösung mit Wasser im scheidetrichter weiter reinigen. Nach Trocknen der organischen Phase mit Natriumsulfat und Abziehen des Lösungsmittels im Vakuum wird das Cyanmethyl-2-acetoxyäthylsulfon als schwach gelbliches Oel erhalten.

Elementaranalyse: C H N S

berechnet 37.69 4.75 7.33 16.77

gefunden 37.1 4.8 7.2 16.6

IR (Film): 2260 $cm^{-1}$ (-CN)

1748 $cm^{-1}$ (-O-$\underline{CO}$-$CH_3$)

d) 2-(β-Acetoxyäthylsulfonyl)-äthylamin

38,2 g (0,2 Mol) rohes Cyanmethyl-2-acetoxyäthylsulfon werden in 360 ml 100 %-iger Essigsäure gelöst und nach Zusatz von 8 g Raney-Nickel im Autoklaven bei Raumtemperatur mit einem Wasserstoffdruck von 120 bar katalytisch hydriert. Nach 5 Stunden beträgt die Wasserstoffaufnahme 7,9 Liter, entsprechend 88 % der Theorie, worauf die Hydrierung beendet wird. Die eingesetzte Essigsäure wird mittels Hochvakuum in eine mit flüssiger Luft gekühlte Vorlage kondensiert. Das 2-(β-Acetoxyäthylsulfonyl)-äthylamin wird als zähflüssiges, gelblich gefärbtes Oel erhalten.

IR (Film): 1750 $cm^{-1}$ (-O-$\underline{CO}$-$CH_3$)

Die Nitrilbande des eingesetzten Ausgangsmaterials ist verschwunden.

**Färbevorschrift I**

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet.

Danach imprägniert man das Gewebe mit einer 20°C warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100 bis 101°C, spült, seift während einer Viertelstunde in einer 0,3%igen kochenden Lösung eines ionenfreinen Waschmittels, spült und trocknet.

**Färbevorschrift II**

2 Teile des gemäss Beispiel 1 erhältlichen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgeeebes in dieses Färbebad ein.

Man steigert die Temperatur auf 40°C, wobei nach 30 Minuten 40 Teile kalzinierte Soda und nochmals 60 Teile Natriumchlorid zugegeben werden. Man hält die Temperatur 30 Minuten auf 40°C, spült und seift dann die Färbung während 15 Minuten in einer 0,3%igen kochenden Lösung eines ionenfreien Waschmittels, spült und trocknet.

Statt eines einheitlichen Farbstoffes der Formel (1) können auch Gemische von mehreren Farbstoffen zum Färben verwendet werden, welche einen Farbstoff der Formel (1) enthalten, worin aber die übrigen Mischungskomponenten nicht notwendigerweise unter die Formel (1) fallen müssen.

So erhält man z.B. auf Baumwolle ebenfalls klare grünstichig gelbe Färbungen, wenn man in den oben angegebenen Färbevorschriften statt des Farbstoffes von Beispiel 1, eine Mischung des Farbstoffes von Beispiel 1 mit dem Farbstoff von Beispiel 1 der Deutschen Offenlegungsschrift 29 27 102 im Molverhältnis 1:1 einsetzt.

**Patentansprüche**

1. Reaktivfarbstoffe der Formel

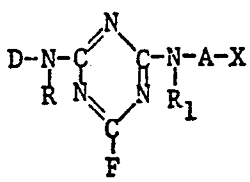 (1),

worin D der Rest eines organischen Farbstoffes, Wasserstoff oder gegebenenfalls substituiertes $C_{1-4}$-Alkyl, $R_1$ Wasserstoff, Methyl oder Aethyl, A ein gegebenenfalls substituiertes aliphatisches oder aromatisches Brückenglied, X ein Rest

$-SO_2-C_2H_4-Y$

oder, nur wenn A ein gegebenenfalls substituiertes aromatisches Brückenglied ist, ein Rest

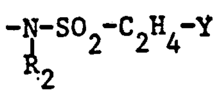 oder 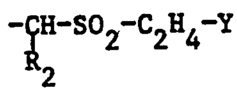

Y ein Rest

$-O-CO-R_3$

oder $-O-SO_2-R_3$

$R_2$ Wasserstoff, Methyl oder Aethyl, und $R_3$ ein gegebenenfalls substituierter aliphati-scher oder aromatischer Rest ist.

2. Reaktivfarbstoffe gemäss Anspruch 1, der Formel

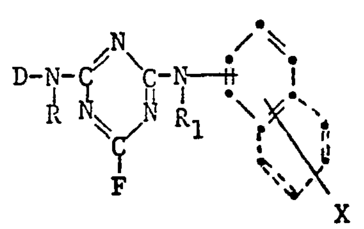

(2),

worin D, R, $R_1$ und X die in Anspruch 1 angegebenen Bedeutungen haben, und der Benzol- bzw. Naphthalinrest ausser X Weitere Substituenten enthalten kann.

3. Reaktivfarbstoffe gemäss Anspruch 2, der Formel

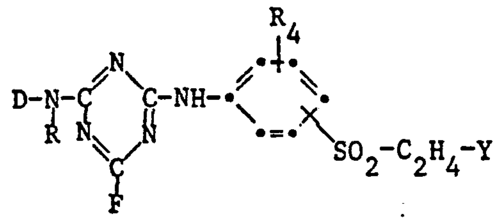

(3),

worin D und R die in Anspruch 2 angegebenen Bedeutungen haben, Y Acetoxy, Aethylcarbonyloxy, Benzoyloxy, Tosyloxy, Phthaloyloxy oder Methylsulfonyloxy, und $R_4$ Wasserstoff, Methyl oder Methoxy ist.

4. Reaktivfarbstoffe gemäss Anspruch 1, der Formel

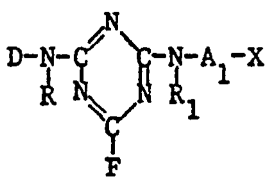

(4),

worin D, R, $R_1$ und X die in Anspruch 1 angegebenen Bedeutungen haben, und $A_1$ $C_{2-6}$-Alkylen ist.

5. Reaktivfarbstoffe gemäss Anspruch 4, der Formel

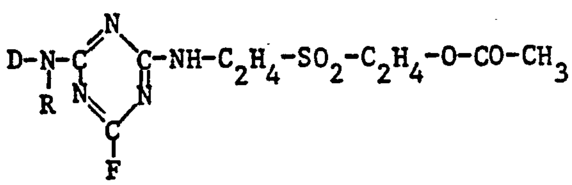

(5),

worin D un R die in Anspruch 4 angegebenen Bedeutungen haben.

6. Reaktivfarbstoffe gemäss einem der Ansprüche 1 bis 5, worin D der Rest eines sulfogruppenhaltigen organischen Farbstoffes der Monooder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe ist.

7. Reaktivfarbstoffe gemäss Anspruch 1, worin D der Rest eines Monooder Disazofarbstoffes ist.

8. Reaktivfarbstoffe gemäss Anspruch 1, worin D der Rest eines Metallkomplexazo- oder Formazanfarbstoffes ist.

9. Reaktivfarbstoffe gemäss Anspruch 1, worin D der Rest eines Antrachinonfarbstoffes ist.

10. Reaktivfarbstoffe gemäss Anspruch 8, worin D der Rest eines Metallkomplexazofarbstoffes der Benzol- oder Naphthalinreihe ist.

11. Reaktivfarbstoffe gemäss Anspruch 10, worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

12. Reaktivfarbstoffe gemäss Anspruch 7, der Formel

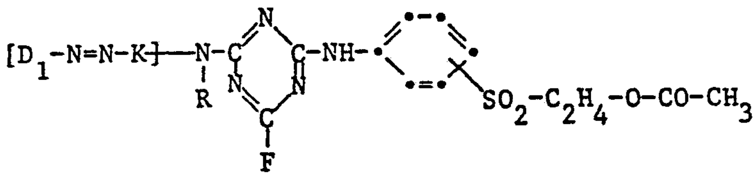 (6),

worin $D_1$ der Rest einer Diazokomponente der Benzol- oder Naphthalinreihe, K der Rest einer KupPlungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist.

13. Reaktivfarbstoffe gemäss Anspruch 12, worin R Wasserstoff, Methyl oder Aethyl ist.

14. Verfahren zur Herstellung von Reaktivfarbstoffen gemäss Anspruch 1, dadurch gekennzeichnet, dass man einen organischen Farbstoff der Formel

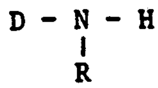 (7)

oder ein Farbstoffvorprodukt, 2,4,6-Trifluor-s-triazin und ein Amin der Formel

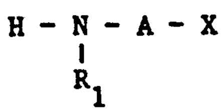 (8)

kondensiert, wobei D, R, $R_1$, A und X in den oben genannten Formeln die in Anspruch 1 angegebenen Bedeutungen haben, und dass man im Falle der Verwendung von Farbstoffvorprodukten, die erhaltenen Zwischenverbindungen in die gewünschten Endfarbstoffe umwandelt.

15. Verwendung der Reaktivfarbstoffe gemäss den Ansprüchen 1 bis 13, bzw. der gemäss Anspruch 14 erhaltenen Reaktivfarbstoffe zum Färben und Bedrucken.

16. Verwendung gemäss Anspruch 15 zum Farben von Cellulosefasern.

## Claims

1. A reactive dye of the formula

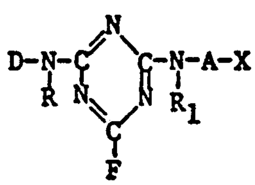 (1)

in which D is the radical of an organic dye, R is hydrogen or substituted or unsubstituted $C_{1-4}$-alkyl, $R_1$ is hydrogen, methyl or ethyl, A is a substituted or unsubstituted iliphatic or aromatic bridge member, X is a radical

$-SO_2-C_2H_4-Y$

or, but only when A is a substituted or unsubstituted aromatic bridge member, X is a radical

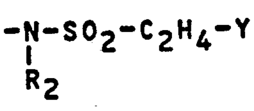 or 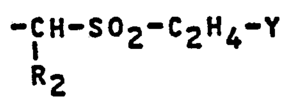,

Y is a radical

$-O-CO-R_3$

or

$-O-SO_2-R_3$

$R_2$ is hydrogen, methyl or ethyl, and $R_3$ is a substituted or unsubstituted aliphatic or aromatic radical.

2. A reactive dye according to claim 1, of the formula

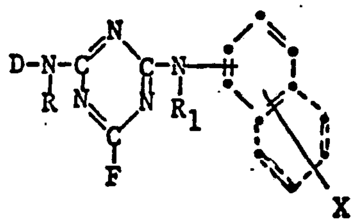

(2)

in which D, R, $R_1$ ind X are is defined in claim 1 and the benzene or naphthalene radical, in addition to X, can contain further substituents.

3. A reactive dye according to claim 2, of the formula

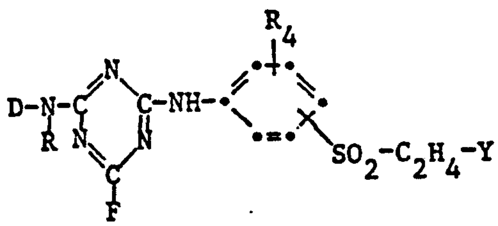

(3)

in which D and R are as defined in claim 2, Y is acetoxy, ethylcarbonyloxy, benzoyloxy, tosyloxy, phthaloyloxy or methylsulfonyloxy, and $R_4$ is hydrogen, methyl or methoxy.

4. A reactive dye according to claim 1, of the formula

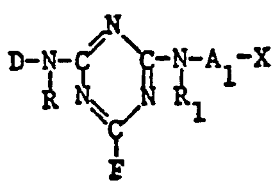

(4)

in which D, R, $R_1$ and X are as defined in claim 1 and $A_1$ is $C_{2-6}$-alkylene.

5. A reactive dye according to claim 4, of the formula

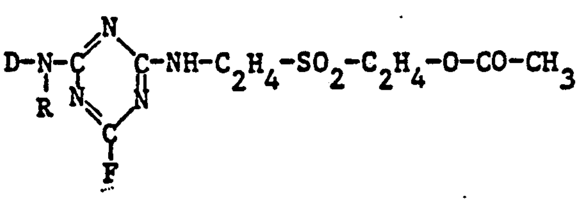

(5)

in which D and R are as defined in claim 4.

6. A reactive dye according to any one of claims 1 to 5, in which D is the radical of a sulfo-containing organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarboximide series.

7. A reactive dye according to claim 1, in which D is the radical of a monoazo or disazo dye.

8. A reactive dye according to claim 1, in which D is the radical of a metal complex azo or formazan dye.

9. A reactive dye according to claim 1, in which D is the radical of an anthraquinone dye.

10. A reactive dye according to claim 8, in which D is the radical of a metal complex azo dye of the benzene or naphthalene series.

11. A reactive dye according to claim 10, in which D is the radical of a 1:1 copper complex azo dye of the benzene or naphthalene series and each copper atom is bonded to a metallizable group in ortho-position to the azo bond.

12. A reactive dye according to claim 7, of the formula

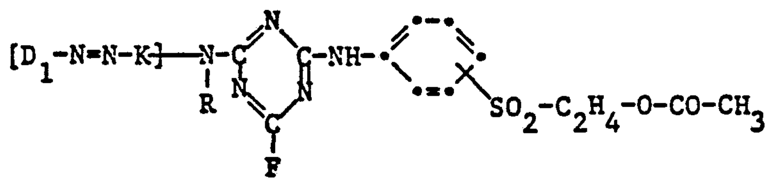 (6)

in which $D_1$ is the radical of a diazo component of the benzene or naphthalene series, K is the radical of a coupling component of the benzene or naphthalene series or of the heterocyclic series, and R is hydrogen or substituted or unsubstituted $C_{1-4}$-alkyl, and the reactive radical is bonded to the diazo component or to the coupling component.

13. A reactive dye according to claim 12, in which R is hydrogen, methyl or ethyl.

14. A process for the preparation of a reactive dye according to claim 1, which comprises condensing an organic dye of the formula

$$D - \underset{R}{\underset{|}{N}} - H \qquad (7)$$

or a dye precursor, 2,4,6-trifluoro-s-triazine and an amine of the formula

$$H - \underset{R_1}{\underset{|}{N}} - A - X \qquad (8)$$

D, R, $R_1$, A and X in the abovementioned formulae being as defined in claim 1, and, if a dye precursor has been used, converting the intermediate compound obtained into the final dye desired.

15. Use of a reactive dye according to any one of claims 1 to 13 or of a reactive dye obtained according to claim 14 for dyeing and printing.

16. Use according to claim 15 for dyeing cellulose fibers.

## Revendications

1. Colorants réactifs de formule

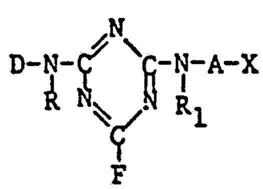 (1),

dans laquelle D est le résidu d'un colorant organique, R est l'hydrogène ou un radical alkyle en $C_{1-4}$ éventuellement substitué, $R_1$ est l'hydrogène, ou le radical méthyle ou éthyle, A est un chaînon pontant, aliphatique ou aromatique, éventuellement substitué, X est un radical $-SO_2-C_2H_4-Y$ ou bien, seulement quand A est un chaînon pontant aromatique éventuellement substitué, un radical

$$-\underset{R_2}{\underset{|}{N}}-SO_2-C_2H_4-Y \quad \text{ou} \quad -\underset{R_2}{\underset{|}{CH}}-SO_2-C_2H_4-Y$$

Y est un radical $-O-CO-R_3$
ou $-O-SO_2-R_3$
$R_2$ est l'hydrogène ou le radical méthyle ou éthyle, et $R_3$ est un radical aliphatique ou aromatique éventuellement substitué.

2. Colorants réactifs selon la revendication 1, de formule

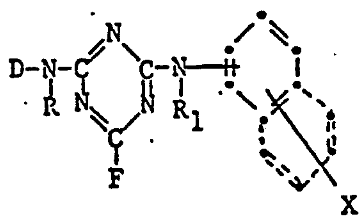

(2),

dans laquelle D, R, $R_1$ et X ont les significations données dans la revendication 1, le radical benzène ou naphtalène pouvant, outre X, contenir d'autres substituants.

3. Colorants réactifs selon la revendication 2, de formule

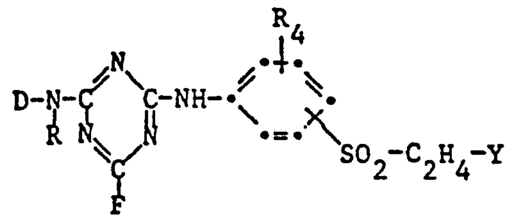

(3),

dans laquelle D et R ont les significations données dans la revendication 2, Y est le radical acétoxy, éthylcarbonyloxy, benzoyloxy, tosyloxy, phthaloyloxy ou méthylsulfonyloxy, et $R_4$ est l'hydrogène ou le radical méthyle ou méthoxy.

4. Colorants réactifs selon la revendication 1, de formule

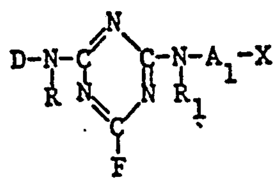

(4),

dans laquelle D, R, $R_1$ et X ont les significations données dans la revendication 1, et $A_1$ représente un radical alkylène en $C_{2-6}$.

5. Colorants réactifs selon la revendication 4, de formule

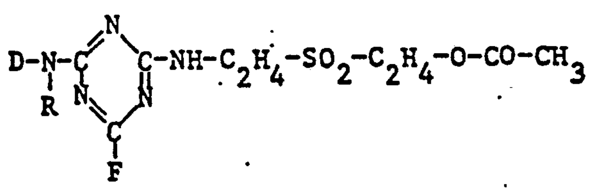

(5),

dans laquelle D et R ont les significations données dans la revendication 4.

6. Colorants réactifs selon l'une des revendications 1 à 5, dans lesquels D est le résidu d'un colorant organique contenant des groupes sulfo, de la série mono- ou polyazoïque, azoïque à complexe métallifère, anthraquinonique, phtalocyanine, formazan, azométhine, dioxazine, phénazine, stilbène, triphénylméthane, xantène, thioxanthone, nitroarylique, naphthoquinonique, pyrènequinonique ou de pérylènetétracarbonimide.

7. Colorants réactifs selon la revendication 1, dans lesquels D est le résidu d'un colorant mono-ou disazoïque.

8. Colorants réactifs selon la revendication 1, dans lesquels D est le résidu d'un colorant formazan ou d'un colorant azoïque à complexe métallifère.

9. Colorants réactifs selon la revendication 1, dans lesquels D est le résidu d'un colorant anthraquinonique.

10. Colorants réactifs selon la revendication 8, dans lesquels D est le résidu d'un colorant azoïque à complexe métallifère de la série du benzène ou du naphtalène.

11. Colorants réactifs selon la revendication 10, dans lesquels D est le résidu d'un colorant azoïque à complexe de cuivre 1: 1 de la série du benzène ou du naphtalène, l'atome de cuivre étant lié à deux groupes métallables, chacun en position ortho par rapport à la liaison azoïque.

12. Colorants réactifs selon la revendication 7, de formule

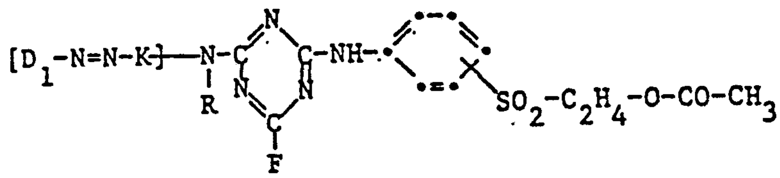 (6),

dans laquelle $D_1$ est le résidu d'un composant diazo de la série du benzène ou du naphthalène, K est le résidu d'un composant de copulation de la série du benzène ou du naphthalène, ou de la série hétérocyclique, et R est l'hydrogène ou un radical alkyle en $C_{1-4}$ éventuellement substitué, le radical réactif étant lié au composant de diazotation ou au composant de copulation.

13. Colorants réactifs selon la revendication 12, dans lesquels R est l'hydrogène, ou le radical méthyle ou éthyle.

14. Procédé pour la préparation de colorants réactifs selon la revendication 1, caractérisé en ce qu'on condense un colorant organique de formule

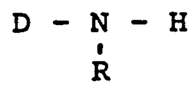 (7)

ou un précurseur de colorant, la 2, 4, 6-trifluoro-s-triazine, et une amine de formule

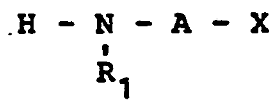 (8)

les radicaux D, R, $R_1$, A et X dans les formules ci-dessus ayant les significations données dans la revendication 1, et en ce que, dans le cas de l'utilisation de précurseurs de colorant, on fait réagir les composés intermédiaires obtenus pour obtenir les colorants finis recherchés.

15. Utilisation des colorants réactifs selon les revendications 1 à 13, ou des colorants réactifs obtenus selon la revendication 14, pour la teinture et l'impression.

16. Utilisation selon la revendication 15 pour la teinture de fibres de cellulose.